# EUROPEAN PATENT APPLICATION

(11) **EP 3 533 689 A1**
(43) Date of publication of application: **04.09.2019**
(21) Application number: 19159785.5
(22) Date of filing: 27.02.2019
(51) Int. Cl.: B62D 35/02, B62D 35/00

(54) **AN AIR GUIDE DEVICE FOR A MOTOR VEHICLE**

(30) Priority: 28.02.2018 GB 201803253
(71) Applicant: Nissan Motor Manufacturing (UK) Ltd, Bedford Bedfordshire MK43 0DB (GB)
(72) Inventor: NUTI, Nazario, Bedford, MK430DB (GB)

(57) **Abstract**

The present invention relates to an air guide device (4) for accelerating airflow underneath a motor vehicle (2) when the vehicle is moving relative to the air. The air guide comprises a pair of air guide elements (28) downwardly extendable from the underbody (3) of the vehicle. Each air guide element is positioned in a region adjacent the inboard side of a respective rear wheel (11) to define an airflow channel between the rear wheels of the vehicle.

## Description

This invention relates to an air guide device for directing airflow underneath a motor vehicle. In particular, it relates to an air guide device for generating a downforce that acts on the vehicle.

### BACKGROUND

The downforce produced by a motor vehicle is key consideration in the vehicle's design from the perspective of safety and efficiency. Many different parts of the vehicle can be modified in order to produce downforce. However, the creation of downforce is, in most cases, also accompanied by an increase in the aerodynamic drag of the vehicle. Accordingly, a compromise between these two forces is often necessary in order to find an optimum arrangement for the vehicle.

An object of this invention is to mitigate or substantially reduce the undesirable effects of creating downforce on vehicles.

### STATEMENTS OF INVENTION

According to a first aspect of the invention, there is provided an air guide device for accelerating airflow underneath a motor vehicle when the vehicle is moving relative to the air, the air guide comprising: a pair of air guide elements downwardly extendable from the underbody of the vehicle, wherein each air guide element is positionable in a region adjacent the inboard side of a respective rear wheel to define an airflow channel between the rear wheels of the vehicle.

Preferably, the longitudinal axis of each air guide element is substantially parallel with respect to the longitudinal axis of the vehicle. Alternatively, the longitudinal axis of each air guide element is angled with respect to the longitudinal axis of the vehicle in a horizontal plane.

Preferably, each air guide element is configured to generate a tip vortex propagating downstream of the air guide device. The tip vortex entrains the wake produced on the inboard side of the rear wheels, thereby lowering the aerodynamic drag of the vehicle.

Preferably, the cross-sectional shape of each air guide element is an aerofoil.

Preferably, the convex side of each air guide element substantially faces the centreline of the vehicle such that, when in use, the resultant lift force generated by each air guide element points towards the centreline of the vehicle.

Alternatively, the convex side of each air guide element substantially faces the inboard side of the respective rear wheel such that, when is use, the resultant life force generated by each air guide element points towards the inboard side of the respective rear wheel.

Preferably, the pair of air guide elements are configured to be moveable between a retracted position, in which each air guide element is stowed within a respective well in the underbody of the vehicle, and a deployed position, in which the pair of air guide elements downwardly extend from the underbody of the vehicle.

Preferably, each of the air guide elements or each of the respective wells comprise a sealing means arranged to seal an intermediate space between the air guide element and the lower surface of the underbody of the vehicle when the air guide elements are in the retracted position.

Alternatively, the edge of each air guide element is arranged to adjoin the edge of its respective well in the underbody of the vehicle when the pair of air guide elements are in the retracted position.

Preferably, the air guide device further comprising a controller and a drive means, wherein the control means is configured to issue an action command causing the drive means to move the air guide elements between the retracted position and the deployed position according to a predetermined condition.

Preferably, the predetermined condition relate to one or more of the following: the speed of the vehicle; the gradient of the surface on which the vehicle is traversing; or, movement in the front suspension system of the vehicle.

Preferably, the pair of air guide elements are downwardly extendable from a region of the underbody in front of a rear diffuser with respect to the longitudinal axis of the vehicle.

Preferably, the pair of air guide elements are arranged to redirect airflow from the longitudinal axis of the vehicle by an angle of up to 90°. More preferably, the pair of air guide elements are arranged to redirect airflow from the longitudinal axis of the vehicle by an angle within the range of 10° to 75°.

According to a second aspect of the invention, there is provided a vehicle comprising an air guide device according to the first aspect of the invention.

### DRAWINGS

Figure 1 is a plan view of the underbody of a vehicle including an air guide device according to a first embodiment of the invention;
Figure 2 is a plan view of the rear region of the vehicle of Figure 1; and,
Figure 3 is a plan view of the rear region of the vehicle of Figure 1, including an air guide device according to a second embodiment of the invention.

In the drawings, like parts are denoted by like reference signs.

### DESCRIPTION

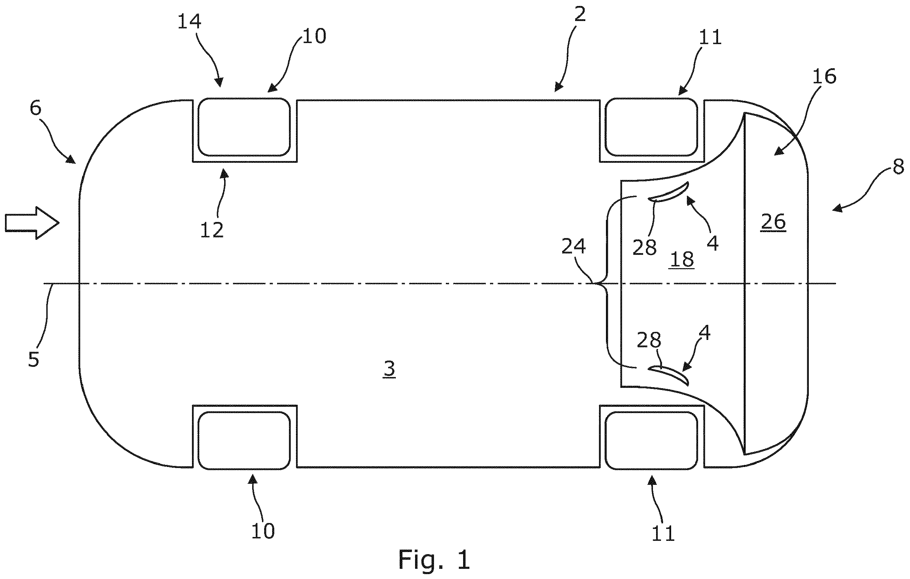

Figure 1 is a plan view of an underbody 3 of a vehicle 2, in this case a motor vehicle, to which an air guide device 4 according to an embodiment of the invention is applied. The front and rear parts of the vehicle 2 are generally designated by 6 and 8, respectively. The vehicle 2 comprises two front tires 10 and two rear tires 11. Each front tire 10 forms part of a front wheel and each rear tire 11 forms part of a rear wheel. Accordingly, the front and rear tires 10, 11 will be referred to as front and rear wheels 10, 11, respectively, hereinafter. The front and rear wheels 10, 11 each have an inboard side 12, which faces or is directed towards the centre of the vehicle 2, and an outboard side 14 that faces away from the vehicle 2. A diffuser component 16 is located in the rear part 8 of the vehicle 2. The diffuser component 16 comprises a flat section 18 and a rear diffuser section 26. The air guide device 4 comprises two air guide elements 28, in the form of strakes 28, moveable between a retracted position, in which the air guide elements 28 are stowed within a respective well (not shown) in the diffuser component 16, and a deployed position, in which the air guide elements 28 downwardly extend from the flat section 18 of the diffuser component 16. Each air guide element 28 or its respective well comprises a sealing means (not shown) arranged to seal an intermediate space between the air guide element 28 and the lower surface of the diffuser component 16 when the air guide element 28 is in the retracted position. Alternatively, the edge of each air guide element 28 is arranged to adjoin the edge of its respective well in the diffuser component 16 when the air guide element 28 is in the retracted position.

The air guide device 4 further comprises a controller and a drive means (both of which are not shown). The controller is configured to receive information relating a predetermined condition and issue an action command causing the drive means to move the air guide elements 28 between the retracted position and the deployed position according to the predetermined condition. The predetermined condition could relate to the speed of the vehicle 2. For example, the controller is configured to issue an action command causing the drive means to move the air guide elements 28 from the retracted positon to the deployed positon on the condition that the vehicle 2 reaches or exceeds a predetermined speed. Conversely, the controller functions to return the air guide elements 28 to the retracted position if the speed of the vehicle 2 falls below the predetermined speed. It is envisaged that one or more other predetermined conditions may be used by the controller for moving the air guide elements 28 instead of or in combination with a predetermined speed. For example, other predetermined conditions could relate to the gradient of the surface on which the vehicle 2 is travelling or movement in the front suspension system.

The air guide elements 28 are positioned adjacent the inboard side 12 of a respective rear wheel 11 and define a channel 24 extending across the flat section 18 when in the deployed position. The channel 24 creates a restricted passage for underbody airflow over the flat section 18 of the diffuser component 16. In use, air flows under the underbody 3 from the front part 6 of the vehicle 2 and accelerates through the channel 24. This acceleration reduces the static pressure under the vehicle 2, thereby increasing the downforce acting on the vehicle 2. The air then flows out of the channel 24 and expands over the rear diffuser section 26 to recover the pressure loss. So the air guide elements 28 or strakes 28 act as local diffusers to generate downforce by creating a localised acceleration of the airflow, which in turn creates a corresponding low pressure region. The air guide elements 28 also have the benefit of using tip vortices to push the wake produced by the rotation of the rear wheels 11 outboard, as is discussed in more detail below. In the embodiment shown, the channel 24 diverges in the direction of the rear diffuser section 26. However, it will be apparent to those skilled in the art that the air guide elements 28 could be orientated with respect to each other to define a convergent, straight, or convergent-divergent channel.

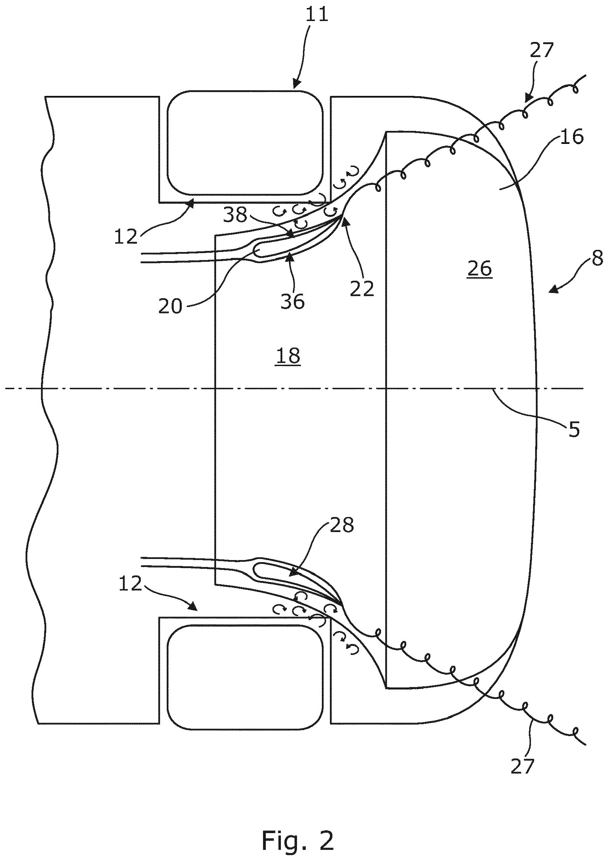

Figure 2 is a detailed plan view of the rear part 8 of the vehicle 2. Each air guide element 28 includes a leading edge 20 and a trailing edge 22. In this embodiment of the air guide device 4, the cross-sectional shape of the air guide elements 28 is an aerofoil. Accordingly, the longitudinal axis of the air guide element 28 is equivalent to its chord line (not shown), which is a fictitious line extending straight from the leading edge 20 to the trailing edge 22. The air guide elements 28 are orientated so that their camber lines (not shown) in the region of their leading edges 20 are substantially parallel to the longitudinal axis of the vehicle 2, while the trailing edges 22 point to a region of the diffuser component 16 located behind the rear wheels 11. Hence, in use, the air guide elements 28 of this embodiment function to redirect air flowing substantially parallel to the longitudinal axis of the vehicle 2. In this instance, airflow 30 is redirected from the longitudinal axis of the vehicle 2 by an angle of substantially 45°.

Each air guide element 28 comprises a suction side 36, which is the convex side of the aerofoil cross section, and a pressure side 38, which is the concave side. In use, the airflow over the suction side 36 accelerates to create a region of low static pressure when compared to the atmospheric pressure. Conversely, the airflow over the pressure side 38 decelerates, which creates a region of high static pressure relative to the atmospheric pressure. The difference in the static pressures on the suction side 36 and the pressure side 38 creates a resultant aerodynamic force or lift force pointing towards the centreline 5 of the vehicle 2. This pressure difference also produces a three-dimensional circulatory flow pattern, in the form of a vortex, as air flows around the lowermost end or the bottom of the air guide element 28 from the pressure side 38 to the suction side 36. The circulatory flow combines to form a turbulent flow structure in the form of a tip vortex 27 that trails from a region near to the trailing edge 22 and propagates downstream of the air guide device 4 substantially behind the rear wheel 11.

The wake produced by the rotation of the rear wheel 11 as the vehicle 2 moves relative to the surrounding air creates a region of low-momentum, turbulent flow that is superimposed on the higher-velocity air flowing underneath the vehicle 2. The rotational flow that characterises the vortex 27 produces a low pressure region at its centre that entrains the wake on the inboard side 12 of the rear wheel 11. This increases the overall momentum of the wake and redirects it away from the vehicle 2, thereby lowering the aerodynamic drag of the vehicle 2.

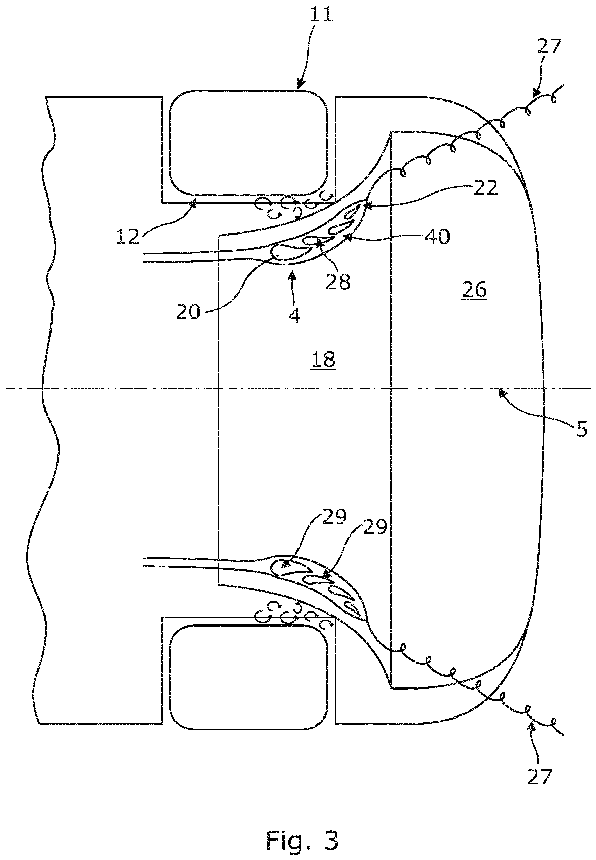

Figure 3 is a detailed view of a second embodiment of the air guide device 4. In this embodiment, the air guide elements 28 each comprise a plurality of plates 29 arranged in series. Specifically, each air guide element 28 comprises four plates 29 arranged in series and positioned such that they collectively define a substantially aerofoil-shaped cross section. Each individual plate 29 of the plurality of plates 29 also has an aerofoil-shaped cross section. The convex sides and concave sides of the plates 29 collectively define the suction side 36 and the pressure side 38 of the air guide element 28, respectively. The plates 29 are offset with respect to each other such that the trailing edge region of one plate 29 is overlaid by the leading edge region of the consecutive plate 29. That is, parts of the respective chord lines of the plates 29 overlay each other. A blowing slot 40 is defined between consecutive plates 29 in the region of the overlay. This embodiment of the air guide 4 comprises three blowing slots 40.

The overall function of the air guide elements 28 of this embodiment is the same as the first embodiment shown in Figure 2. That is, a region of low static pressure is created by an accelerating airflow over the suction side 36 of the air guide element 28 and a region of high static pressure is created by a decelerating airflow over the pressure side 38. The pressure difference between the suction side 36 and the pressure side 38 creates a resultant lift force pointing towards the centreline 5 of the vehicle 2, as well as a tip vortex 27 propagating downstream of the air guide device 4 substantially behind the rear wheels 11. The tip vortex 27 is produced from air flowing around the bottom of the air guide element 28 from the pressure side 38 to the suction side 36. However, this embodiment is configured also to allow air to flow from the pressure side 38 to the suction side 36 of the air guide element 28 through the blowing slots 40. Air flowing over the suction side 36 of the air guide element 28 travels through an adverse or unfavourable pressure gradient. That is, the convex shape of the suction side 36 means that the static pressure gradient increases in the flow direction, from the leading edge 20 to the trailing edge 22. This can cause the airflow to separate from the suction side 36 before it reaches the trailing edge 22 of the air guide element 28, which would create high form drag and result in a breakdown of the circulatory flow needed to form the tip vortex 27. However, early separation of the airflow is avoided in the present embodiment by the introduction of high energy or turbulent air through the blowing slots 40. This raises the kinetic energy of the airflow on the suction side 36 at intervals corresponding to the positioning of the blowing slots 40, meaning that it can withstand the adverse pressure gradient and stay connected to the suction side 36 until it reaches the trailing edge 22 of the air guide element 28.

In the embodiments shown, the air guide elements 28 only partially extend along the flat section 18 of the diffuser component 16. However, it will be apparent to those skilled in the art that the air guide elements 28 could be configured to extend to the end of the flat section 18. That is, the trailing edges 22 of the air guide elements 28 could be located at the transition of the flat section 18 and the rear diffuser section 26. This way, the pressure reduction through the channel 24 is maximised before the pressure recovery over the rear diffuser section 26. Similarly, the leading edges 20 could be located at the front of the flat section 18 of the diffuser component 16 with respect to the longitudinal axis of the vehicle 2.

It will be appreciated by those skilled in the art that the invention has been described by way of example only, and that a variety of alternative approaches may be adopted without departing from the scope of the invention as defined by the appended claims.

## Claims

1. An air guide device for accelerating airflow underneath a motor vehicle when the vehicle is moving relative to the air, the air guide comprising:
a pair of air guide elements downwardly extendable from the underbody of the vehicle, wherein each air guide element is positionable in a region adjacent the inboard side of a respective rear wheel to define an airflow channel between the rear wheels of the vehicle.

2. An air guide device according to claim 1, wherein the longitudinal axis of each air guide element is substantially parallel with respect to the longitudinal axis of the vehicle.

3. An air guide device according to claim 1, wherein the longitudinal axis of each air guide element is angled with respect to the longitudinal axis of the vehicle in a horizontal plane.

4. An air guide device according to any of claims 1 to 3, wherein each air guide element is configured to generate a tip vortex propagating downstream of the air guide device.

5. An air guide device according to any preceding claim, wherein the cross-sectional shape of each air guide element is an aerofoil.

6. An air guide device according to claim 5, wherein the convex side of each air guide element substantially faces the centreline of the vehicle such that, when in use, the resultant lift force generated by each air guide element points towards the centreline of the vehicle.

7. An air guide device according to claim 5, wherein the convex side of each air guide element substantially faces the inboard side of the respective rear wheel such that, when is use, the resultant life force generated by each air guide element points towards the inboard side of the respective rear wheel.

8. An air guide device according to any preceding claim, wherein the pair of air guide elements are configured to be moveable between a retracted position, in which each air guide element is stowed within a respective well in the underbody of the vehicle, and a deployed position, in which the pair of air guide elements downwardly extend from the underbody of the vehicle.

9. An air guide device according to claim 8, wherein each of the air guide elements or each of the respective wells comprise a sealing means arranged to seal an intermediate space between the air guide element and the lower surface of the underbody of the vehicle when the air guide elements are in the retracted position.

10. An air guide device according to claim 8, wherein the edge of each air guide element is arranged to adjoin the edge of its respective well in the underbody of the vehicle when the pair of air guide elements are in the retracted position.

11. An air guide device according to any one of claims 8 to 10, further comprising a controller and a drive means, wherein the control means is configured to issue an action command causing the drive means to move the air guide elements between the retracted position and the deployed position according to a predetermined condition.

12. An air guide device according to claim 11, wherein the predetermined condition relate to one or more of the following: the speed of the vehicle; the gradient of the surface on which the vehicle is traversing; or, movement in the front suspension system of the vehicle.

13. An air guide device according to any preceding claim, wherein the pair of air guide elements are downwardly extendable from a region of the underbody in front of a rear diffuser with respect to the longitudinal axis of the vehicle.

14. An air guide device according to any of claims 3 to 13, wherein the pair of air guide elements are arranged to redirect airflow from the longitudinal axis of the vehicle by an angle of up to 90°.

15. A vehicle comprising an air guide device according to any preceding claim.
